# EUROPÄISCHE PATENTSCHRIFT

(11) **EP 3 144 101 B1**
(45) Veröffentlichungstag und Bekanntmachung des Hinweises auf die Patenterteilung: **19.06.2019**
(21) Anmeldenummer: 16185540.8
(22) Anmeldetag: 24.08.2016
(51) Int. Cl.: B23Q 39/02

(54) **WERKZEUGMASCHINE MIT EINER FUNKTIONSBAUGRUPPE**
MACHINE TOOL WITH A FUNCTION MODULE
MACHINE-OUTIL COMPRENANT UN MODULE DE FONCTION

(30) Priorität: 15.09.2015 DE 102015115542
(43) Veröffentlichungstag der Anmeldung: 22.03.2017
(73) Patentinhaber: Alfing Kessler Sondermaschinen GmbH, 73433 Aalen (DE)
(72) Erfinder: Stave, Hinrich, 72622 Nürtingen (DE); Bauer, Alexander, 73434 Aalen (DE); Göggerle, Markus, 73497 Tannhausen (DE)
(74) Vertreter: Patentanwälte Bregenzer und Reule Partnerschaftsgesellschaft mbB

(56) Entgegenhaltungen:
- DE-A1- 10 358 381
- DE-A1-102013 012 633
- DE-B3-102006 048 896

## Beschreibung

Die Erfindung betrifft eine Werkzeugmaschine mit einer Hauptspindelanordnung und einem Werkstückträger gemäß dem Oberbegriff des Anspruchs 1.

Eine derartige Werkzeugmaschine ist beispielsweise in DE 10 2013 012 633 A1 beschrieben.

Eine weitere Werkzeugmaschine ist in DE 10 2007 054 268 A1 beschrieben. Der Werkstückträger kann nach oben vor die Hauptspindelanordnung verfahren werden. Oberhalb der Hauptspindelanordnung ist ein Werkstückwechsel vorgesehen, d.h. dass beispielsweise bearbeitete Werkstücke vom Werkstückträger entnommen und zur Bearbeitung anstehende Werkstücke an dem Werkstückträger angeordnet werden können. Während des Werkstückwechsels bleibt der Werkstückträger an Ort und Stelle. Der Funktionsumfang der bekannten Werkzeugmaschine ist eingeschränkt.

Es ist daher die Aufgabe der vorliegenden Erfindung, eine Werkzeugmaschine mit erweiterter Funktionalität bereitzustellen.

Zur Lösung der Aufgabe ist eine Werkzeugmaschine gemäß der technischen Lehre des Anspruchs 1 vorgesehen.

Es ist dabei ein Grundgedanke, dass die Werkzeugmaschine über die der Hauptspindelanordnung oder der mindestens einen Hauptwerkzeugspindel zugeordnete Bearbeitungsachse, die eine erste Bearbeitungsachse bildet, hinaus eine zweite Bearbeitungsachse hat, die jedoch nicht durch eine Verstellung der Hauptspindelanordnung realisiert ist, sondern durch eine Verstellung des Werkstückträgers relativ zu der Funktionsbaugruppe. An dieser Stelle sei bemerkt, dass neben der Hauptspindelanordnung auch mindestens eine weitere Werkzeugspindel vorgesehen sein kann, die anhand einer Linearführung zu dem Werkstückträger hin und von diesem weg entlang einer Bearbeitungsachse verstellbar ist. Diese weitere Werkzeugspindel könnte man auch als Nebenspindel bezeichnen.

Die Funktionsbaugruppe ist räumlich neben dem Werkstückträger und der Hauptspindelanordnung angeordnet, beispielsweise mit einem Winkelversatz. Der Werkstückträger und die Funktionsbaugruppe können in einer Reihenrichtung nebeneinander vorgesehen sein. Beispielsweise kann der Werkstückträger unterhalb der Funktionsbaugruppe angeordnet sein.

Bevorzugt sind Bearbeitungsräume der Hauptspindelanordnung und der Funktionsbaugruppe räumlich voneinander getrennt. Während die Hauptspindelanordnung sozusagen selbst beweglich ist, nämlich entlang der ersten Bearbeitungsachse, so dass sie relativ zu dem zu bearbeitenden mindestens einen Werkstück positionierbar ist, wird das mindestens eine Werkstück anhand des beweglichen Werkstückträgers zu der Funktionsbaugruppe hin und von dieser weg bewegt. Die Funktionsbaugruppe selbst braucht also nicht beweglich zu sein.

Anhand der Hauptspindelanordnung kann das mindestens eine Werkstück bearbeitet werden, wobei die mindestens eine Hauptwerkzeugspindel entlang der ersten Bearbeitungsachse relativ zu dem mindestens einen Werkstück verstellbar ist. Die mindestens eine Hauptwerkzeugspindel ist beispielsweise anhand einer Linearführung relativ zu der Maschinenbasis oder einem Maschinenbett der Werkzeugmaschine gelagert.

Die Werkstücke bleiben oder das mindestens eine Werkstück bleibt also am Werkstückträger, während die Funktionsbaugruppe die mindestens eine Funktion an dem mindestens einen Werkstück oder den Werkstücken ausführt. Die mindestens eine Funktion kann beispielsweise eine Werkstückbearbeitung vorsehen, zum Beispiel anhand einer Werkzeugspindel der Funktionsbaugruppe oder eines Bearbeitungswerkzeugs. Die mindestens eine Funktion kann aber auch eine Zentrierfunktion und/oder Prüffunktion und/oder Messfunktion sein.

Beispielsweise bleibt das mindestens eine Werkstück an dem Werkstückhalter ortsfest gehalten, insbesondere gespannt. Es ist aber auch möglich, dass der Werkstückhalter das Werkstück um ein gewisses Maß freigibt, sodass die Funktionsbaugruppe beispielsweise das Werkstück relativ zum Werkstückhalter zentrieren oder positionieren kann.

Eine zweckmäßige Ausgestaltung der Erfindung sieht vor, dass die mindestens eine Funktionsbaugruppe mindestens eine Werkzeugspindel umfasst. An der Werkzeugspindel kann ein Bearbeitungswerkzeug angeordnet sein, beispielsweise ein Bohrkopf, Fräskopf oder dergleichen. Der Werkstückträger verstellt das mindestens eine Werkstück entlang der zweiten Bearbeitungsachse zu der mindestens einen Werkzeugspindel der Funktionsbaugruppe und deren Bearbeitungswerkzeug hin, so dass beispielsweise der Vorschub in Bearbeitungsrichtung durch den Werkstückträger geleistet wird.

Die mindestens eine Werkzeugspindel der Funktionsbaugruppe ist beispielsweise ortsfest bezüglich einer Maschinenbasis an einem Baugruppenträger der Funktionsbaugruppe angeordnet. Die Verstellarbeit bzw. der Werkstückvorschub wird also sozusagen von dem Werkstückträger geleistet, während die mindestens eine Werkzeugspindel der Funktionsbaugruppe ortsfest bezüglich der Maschinenbasis bleibt.

Es ist aber auch möglich, dass die mindestens eine Werkzeugspindel beweglich, insbesondere linear entlang oder parallel zu der ersten Bearbeitungsachse und/oder der zweiten Bearbeitungsachse beweglich, an dem Baugruppenträger anhand einer ersten oder zweiten Linearführung gelagert ist. Es ist also möglich, dass die mindestens eine Werkzeugspindel beispielsweise quer zu der Werkstückträger-Linearführung bzw. deren Stellachse an dem Baugruppenträger linear geführt ist.

Die Hauptspindelanordnung kann beispielsweise mindestens einen Werkzeugrevolver umfassen oder aufweisen. Der Werkzeugrevolver weist einen um eine Revolverachse drehbaren Werkzeugträger zur Positionierung jeweils eines Bearbeitungswerkzeugs in eine Bearbeitungsposition und einen Werkzeugantrieb zum Dreh-Antreiben des in der Bearbeitungsposition befindlichen Bearbeitungswerkzeugs auf.

Bevorzugt ist die Werkzeugmaschine eine Mehrspindel-Bearbeitungsmaschine oder Mehrspindelmaschine.

Bevorzugt ist eine Reihenanordnung mit mindestens zwei Werkzeugspindeln der Spindelanordnung der Funktionsbaugruppe. Zweckmäßigerweise sind drei oder weitere Werkzeugspindeln der Spindelanordnung der Funktionsbaugruppe in einer Reihenrichtung oder entlang einer Reihenachse nebeneinander angeordnet.

Die Reihenachse der Werkzeugspindeln der Funktionsbaugruppe entspricht zweckmäßigerweise einer Reihenachse, entlang derer Werkstückhalter an dem Werkstückträger angeordnet sind. Somit können gleichzeitig mehrere an den Werkstückhaltern gehaltene Werkstücke mit den Bearbeitungswerkzeugen der Werkzeugspindeln der Funktionsbaugruppe gleichzeitig bearbeitet werden.

Es ist nämlich vorteilhaft vorgesehen, dass an dem Werkstückträger mindestens zwei, vorzugsweise drei oder weitere, in einer Reihenrichtung nebeneinander angeordnete Werkstückhalter angeordnet sind. Diese mehreren Werkstückhalter ermöglichen es, dass mehrere Werkstücke gleichzeitig durch die Bearbeitungswerkzeuge der Funktionsbaugruppe und/oder durch Bearbeitungswerkzeuge der mindestens einen Hauptwerkzeugspindel, die entlang der ersten Bearbeitungsachse verstellbar ist, bearbeitbar sind.

An dieser Stelle sei eine vorteilhafte Maßnahme erwähnt, nämlich dass die Werkzeugmaschine mehrere, zum Beispiel mindestens zwei, entlang der ersten Bearbeitungsachse verstellbare Hauptwerkzeugspindeln aufweist. Die Hauptwerkzeugspindeln sind zweckmäßigerweise in einer Reihenrichtung nebeneinander angeordnet. Die Reihenrichtung oder Reihenachse entspricht zweckmäßigerweise der Reihenachse, entlang derer die Werkstückhalter an dem Werkstückträger vorteilhaft angeordnet sind. Somit können mehrere dieser in der ersten Bearbeitungsachse verstellbaren Hauptwerkzeugspindeln am Werkstückträger angeordnete Werkstücke gleichzeitig bearbeiten.

Eine vorteilhafte Ausgestaltung der Erfindung sieht vor, dass die mindestens eine Hauptwerkzeugspindel oder die Hauptwerkzeugspindeln, die der ersten Bearbeitungsachse zugeordnet ist oder sind, an einem Werkzeugschlitten ortsfest angeordnet ist oder sind. Der Werkzeugschlitten ist beispielsweise an einer Linearführung an einer Maschinenbasis oder einem Maschinenbett der Werkzeugmaschine linear entlang der ersten Bearbeitungsachse gelagert. Der Werkzeugschlitten kann als Ganzes mehrere, also zum Beispiel mindestens zwei, Hauptwerkzeugspindeln Richtung des Werkstückträgers oder der Werkstücke entlang der ersten Bearbeitungsachse verstellen.

Bevorzugt ist es, wenn die Hauptwerkzeugspindeln, die der ersten Bearbeitungsachse zugeordnet sind, eine erste Hauptwerkzeugspindelreihe und eine zweite Hauptwerkzeugspindelreihe mit mindestens zwei in einer Reihenrichtung nebeneinander angeordneten Hauptwerkzeugspindeln bilden. Die Hauptwerkzeugspindelreihen oder die Reihenrichtungen derselben sind beispielsweise horizontal übereinander angeordnet. Beispielsweise verlaufen die Hauptwerkzeugspindelreihen horizontal. Vorzugsweise sind die Hauptwerkzeugspindelreihen zueinander parallel.

Der Werkstückträger ist zweckmäßigerweise anhand der Werkstückträger-Linearführung zur Positionierung des mindestens einen Werkstücks, vorzugsweise mindestens zweier Werkstücke, relativ zu der ersten Hauptwerkzeugspindelreihe und der zweiten Hauptwerkzeugspindelreihe ausgestaltet. Beispielsweise kann der Werkstückträger relativ zu den Werkstückspindelreihen vertikal auf und ab entlang der Stellachse verstellt werden. Somit können also beispielsweise die an dem Werkstückträger in einer Reihenrichtung nebeneinander angeordneten Werkstücke zunächst durch die Bearbeitungswerkzeuge der Hauptwerkzeugspindeln der ersten Hauptwerkzeugspindelreihe und danach durch die Bearbeitungswerkzeuge der Hauptwerkzeugspindeln der zweiten Werkzeugspindelreihe bearbeitet werden. Eine Hauptwerkzeugspindelreihe ist also dabei aktiv, während die andere Hauptwerkzeugspindelreihe sozusagen inaktiv ist. Bei der inaktiven Hauptwerkzeugspindelreihe kann ein Werkzeugwechsel durchgeführt werden.

Eine Spindelachse der mindestens einen Hauptwerkzeugspindel oder Spindelachsen aller Hauptwerkzeugspindeln verlaufen zweckmäßigerweise parallel zu der ersten Bearbeitungsachse.

Eine Spindelachse oder die Spindelachsen der Werkzeugspindeln der Funktionsbaugruppe verlaufen zweckmäßigerweise parallel zu der zweiten Bearbeitungsachse.

Die Funktionsbaugruppe kann alternativ oder in Ergänzung zu der mindestens einen Werkzeugspindel andere Komponenten enthalten. Beispielsweise ist es vorteilhaft, wenn die Funktionsbaugruppe mindestens eine Prüfeinrichtung zum Prüfen und/oder zum Messen des an dem mindestens einen Werkstückhalter angeordneten Werkstücks aufweist. Somit kann beispielsweise der Werkstückhalter bei seiner Verstellung entlang seiner Stellachse oder der zweiten Bearbeitungsachse das Werkstück in Richtung der Prüfeinrichtung oder Messeinrichtung verstellen. Die Messeinrichtung oder Prüfeinrichtung als solche muss also nicht zu dem Werkstück hin verstellt werden, was eine bauliche Vereinfachung darstellen kann.

Es ist aber auch möglich, dass die Funktionsbaugruppe mindestens eine Zentriereinrichtung zum Zentrieren des an dem mindestens einen Werkstückhalter angeordneten Werkstücks umfasst. Der Werkstückhalter kann also beispielsweise um ein gewisses Maß geöffnet werden oder die Spannung herabgesetzt werden derart, dass das Werkstück zwar noch am Werkstückhalter gehalten ist, gleichzeitig aber die Zentriereinrichtung das Werkstück relativ zum Werkstückhalter zentriert.

Ohne weiteres ist es möglich, dass die Funktionsbaugruppe mehrere Messeinrichtungen oder Prüfeinrichtungen und/oder mehrere Zentriereinrichtungen umfasst. Vorzugsweise ist dabei vorgesehen, dass die Zentriereinrichtungen oder Messeinrichtungen oder Prüfeinrichtungen einer Reihenrichtung nebeneinander angeordnet sind.

Wenn Komponenten, also beispielsweise mindestens eine Werkzeugspindel und/oder mindestens eine Messeinrichtung oder Prüfeinrichtung und/oder mindestens eine Zentriereinrichtung, der Funktionsbaugruppe in einer Reihenrichtung nebeneinander angeordnet sind, verläuft diese Reihenrichtung vorzugsweise entlang einer linearen oder geradlinigen Achse. Diese Reihenrichtung entspricht zweckmäßigerweise einer Reihenrichtung der Werkstückhalter, entlang derer diese am Werkstückträger angeordnet sind. Weiterhin ist es vorzugsweise vorgesehen, dass diese Komponenten in gleichen Distanzen wie die Werkstückhalter zueinander angeordnet sind. Somit ist es jedenfalls möglich, dass mehrere am Werkstückträger angeordnete Werkstücke gleichzeitig in Eingriff mit Komponenten der Funktionsbaugruppe gelangen können, um die mindestens eine Funktion auszuführen.

Vorteilhaft ist vorgesehen, dass die erste Bearbeitungsachse oder die Bearbeitungsachse der mindestens einen Hauptwerkzeugspindel und die zweite Bearbeitungsachse zueinander orthogonal bzw. rechtwinkelig sind. Denkbar ist aber auch eine schräge Anordnung mit einem Winkel von mehr oder weniger als 90° zwischen der ersten und der zweiten Bearbeitungsachse.

Zweckmäßigerweise ist die erste Bearbeitungsachse oder die Bearbeitungsachse der mindestens einen Hauptwerkzeugspindel eine horizontale Bearbeitungsachse, beispielsweise eine sogenannte Z-Achse man könnte diese erste Bearbeitungsachse auch als eine Z1-Achse bezeichnen.

Die zweite Bearbeitungsachse ist zweckmäßigerweise eine vertikale Bearbeitungsachse oder vertikalen Stellachse, beispielsweise eine Y-Achse oder Z2-Achse.

Eine zweckmäßige Ausgestaltung der Erfindung sieht vor, dass die Funktionsbaugruppe einen Baugruppenträger aufweist, der ortsfest an einer Maschinenbasis der Werkzeugmaschine angeordnet ist. Somit werden also die Werkstücke relativ zu dem ortsfesten Baugruppenträger anhand des Werkstückträgers verstellt. Ein derartiger Baugruppenträger ist vorzugsweise als ein Portal ausgestaltet oder an einem Portal angeordnet. Beispielsweise sind Funktionselemente, insbesondere Werkzeugspindeln, Prüfeinrichtungen, Zentriereinrichtungen oder dergleichen, der Funktionsbaugruppe an einem balkenartigen Baugruppenträger angeordnet, der sich zwischen zwei an der Maschinenbasis, insbesondere einem Maschinenbett, der Werkzeugmaschine abgestürzten und vor das Maschinenbett oder die Maschinenbasis nach oben vorstehenden Stützen erstreckt und an diesen Stützen abgestützt ist.

Alternativ ist aber auch denkbar, dass der Baugruppenträger beispielsweise galgenartig ausgestaltet ist, d.h. dass er eine in Seitenansicht beispielsweise L-förmige Gestalt hat.

Erfindungsgemäß ist vorgesehen, dass die Werkstückträger-Linearführung an mindestens einer Stütze zum Stützen der Funktionsbaugruppe angeordnet ist. Beispielsweise sind die vorgenannten beiden Stützen, an denen der Baugruppenträger der Funktionsbaugruppe abgestützt ist, gleichzeitig die Basen für die Werkstückträger-Linearführung. An jeder dieser Stützen ist beispielsweise mindestens eine Führungsschiene der Linearführung angeordnet. Beispielsweise erstreckt sich der Werkstückträger zwischen den Stützen.

Der Vorteil dieser Konfiguration ist es, dass beispielsweise Türme oder Stützen, die ohnehin zum Stützen des Werkstückträgers notwendig sind, gleichzeitig den Baugruppenträger der Funktionsbaugruppe tragen.

Wenn die Funktionsbaugruppe bzw. deren Baugruppenträger seitliche Stützen aufweist, werden diese durch den Baugruppenträger sogar noch stabilisiert. Es entsteht ein Portal oder eine in Frontalansicht beispielsweise H-förmige oder U-förmige Konfiguration. Eine derartige Konstruktion zeichnet sich durch besondere Stabilität aus. Somit können beispielsweise an den seitlichen Stützen angeordnete Führungselemente der Werkstückträger-Linearführung sogar noch besonders günstig abgestützt sein.

Eine bevorzugte Ausgestaltung der Erfindung sieht vor, dass die Funktionsbaugruppe oberhalb der Werkstückträger-Linearführung oder Werkstückträger-Linearführungen oder des Werkstückträgers angeordnet ist. Somit wird der Bauraum oberhalb des Werkstückträgers für die Funktionsbaugruppe genutzt.

Zweckmäßigerweise ist vorgesehen, dass der Werkstückträger als ein Werkstückbalken ausgestaltet ist. Eine Längsachse des Werkstückbalkens oder des Werkstückträgers definiert vorzugsweise eine Reihenachse oder ist parallel zu einer Reihenachse, entlang derer die Werkstückhalter am Werkstückträger zum Halten mehrerer Werkstücke angeordnet sind.

Bevorzugt ist es, wenn der Werkstückträger um eine Positionier-Schwenkachse schwenkbar gelagert ist. Somit ist es möglich, dass die Werkstücke, die am Werkstückträger gehalten sind, durch den Werkstückträger in Richtung der Hauptspindelanordnung und in Richtung der Funktionsbaugruppe schwenkbar sind. Beispielsweise ist die Positionier-Schwenkachse gleichzeitig die Längsachse des Werkstückträgers oder des Werkstückbalkens. Vorzugsweise ist vorgesehen, dass die Positionier-Schwenkachse zu beispielsweise der horizontalen Bearbeitungsachse und/oder zu der Stellachse, mithin also zu der zweiten Bearbeitungsachse quer, insbesondere rechtwinkelig quer, verläuft.

Weitere Bewegungsfreiheitsgrade sind ohne weiteres möglich. Zweckmäßigerweise ist beispielsweise vorgesehen, dass die mindestens eine entlang der ersten Bearbeitungsachse verstellbaren Hauptwerkzeugspindel und/oder der Werkstückträger und/oder die Funktionsbaugruppe quer zu der ersten Bearbeitungsachse und der zweiten Bearbeitungsachse beweglich gelagert ist. Beispielsweise können eine oder mehrere dieser Komponenten entlang einer sogenannten X-Achse oder einer horizontalen Achse beweglich gelagert sein.

Beispielsweise kann die mindestens eine Hauptwerkzeugspindel, die entlang der ersten Bearbeitungsachse beweglich an einer Maschinenbasis oder einem Maschinenbett der Werkzeugmaschine beweglich gelagert ist, anhand eines Kreuzschlittens sowohl in Richtung der ersten Bearbeitungsachse als auch quer dazu, insbesondere horizontal quer dazu, beweglich gelagert sein.

Weiterhin ist es möglich, dass beispielsweise der Werkstückträger ebenfalls entlang einer X-Achse oder parallel zu einer X-Achse oder horizontalen Achse beweglich gelagert ist. Somit kann der Werkstückträger quer zu der in der ersten Bearbeitungsachse beweglichen mindestens einen Hauptwerkzeugspindel verstellt werden.

Die Funktionsbaugruppe kann also beispielsweise um eine, zwei oder drei oder auch weitere Achsen linear verstellbar sein. Besonders zweckmäßig ist eine Verstellbarkeit der Funktionsbaugruppe um mindestens zwei zueinander rechtwinkelige Achsen, beispielsweise zwei horizontale Achsen, die zueinander rechtwinkelig sind oder zwei Achsen, von denen eine horizontal, die andere vertikal verläuft. Insgesamt ist also eine Verstellbarkeit der Funktionsbaugruppe um beispielsweise eine X-Achse und/oder eine Y-Achse und/oder eine Z-Achse vorteilhaft.

Ohne weiteres kann die Funktionsbaugruppe aber auch um eine oder mehrere Schwenkachsen verschwenkbar sein, beispielsweise um eine der vorgenannten Achsen. An dieser Stelle sei betont, dass eine Kombination aus Schwenkbarkeit und linearer Verstellbarkeit der Funktionsbaugruppe ohne weiteres möglich ist. So ist zum Beispiel möglich, dass die Funktionsbaugruppe um mindestens eine Schwenkachse schwenkbar und um mindestens eine Achse linear verfahrbar ist. Aber bewegliche Lagerung oder Verstellbarkeit der Funktionsbaugruppe um mindestens zwei Schwenkachsen und entlang beispielsweise einer oder mehrerer Linearachsen ist ohne weiteres möglich.

Wenn gleichzeitig auch die Hauptspindelanordnung bzw. eine Bearbeitungseinheit und/oder der Werkstückträger um eine oder mehrere Achsen linear verstellbar und/oder schwenkbar ist, können am Werkstückträger gehaltene Werkstücke gleichzeitig sowohl durch die Hauptspindelanordnung oder Bearbeitungseinheit und die Funktionsbaugruppe Bearbeitungen oder jedenfalls Funktionen an den Werkstücken ausgeführt werden.

Es versteht sich, dass eine jeweiligen Linearführung zweckmäßigerweise ein Antrieb zugeordnet ist, d.h. dass beispielsweise ein Werkzeugschlitten für die Hauptspindelanordnung anhand eines Antriebs entlang der ersten Bearbeitungsachse oder Z-Achse verstellbar ist. Auch der Werkstückträger-Linearführung ist zweckmäßigerweise ein Antrieb zugeordnet, beispielsweise ein Schlittenantrieb. Insoweit Drehantriebe notwendig sind, beispielsweise zum Drehen oder schwenken des Werkstückträgers um die Positionier-Schwenkachse, ist hierfür mindestens ein motorischer Drehantrieb, beispielsweise ein Elektromotor, vorgesehen.

Nachfolgend werden Ausführungsbeispiele der Erfindung anhand der Zeichnung erläutert. Es zeigen:
- Figur 1: eine perspektivische Schrägansicht einer Werkzeugmaschine von schräg oben, die in
- Figur 2: von schräg unten vorn dargestellt ist,
- Figur 3: Werkzeugmaschine gemäß Figuren 1 und 2 von schräg vorn,
- Figur 4: eine Seitenansicht der Werkzeugmaschine und
- Figur 5: eine Variante der Werkzeugmaschine gemäß vorstehender Figuren mit einem Werkzeugrevolver.

Eine Werkzeugmaschine 10 weist eine Maschinenbasis 11 auf. Die Maschinenbasis 11 umfasst einen Werkzeugabschnitt 12 und einen Werkstückabschnitt 13, die beispielsweise winkelig zueinander angeordnet sind. In Draufsicht ist die Maschinenbasis 11, die man auch als Maschinenbett bezeichnen könnte, beispielsweise T-förmig, was aber nicht einschränkend verstanden werden soll. Der Werkzeugabschnitt 12 und der Werkstückabschnitt 13 können einstückig sein oder fest miteinander verbunden sein.

An dem Werkzeugabschnitt 12 ist ein Werkzeugschlitten 20 zumindest entlang einer Bearbeitungsachse Z1, die nachfolgend auch als Z1-Achse bezeichnet wird, linear gelagert. Hierfür ist eine Linearführung 21 vorgesehen, die beispielsweise auf einer Oberseite des Werkzeugabschnitts 12 vorgesehen ist. Die Linearführung 21, die man auch als Z1-Führung bezeichnen könnte, umfasst beispielsweise Führungsschienen 22, an denen der Werkzeugschlitten 20 beweglich gelagert ist.

Beispielsweise ist ein Schlittenträger 26, der eine Schlittenbasis 27 des Werkzeugschlittens 20 trägt, an den Führungsschienen 22 beweglich gelagert, beispielsweise mit Rollen, Gleitstücken oder dergleichen.

Ein Schlittenantrieb 23 dient zum Antreiben des Werkzeugschlittens 20 entlang der Z1-Achse. Der Schlittenantrieb 23 umfasst beispielsweise einen Antriebsmotor 24 sowie einen Spindeltrieb 25, der mit dem Werkzeugschlitten 20, beispielsweise dem Schlittenträger 26, gekoppelt ist.

Eine Ausführungsform der Erfindung kann vorsehen, dass der Werkzeugschlitten 20 nur entlang der Z1-Achse beweglich gelagert ist. In diesem Falle wäre beispielsweise die Schlittenbasis 27 mit dem Schlittenträger 26 einstückig oder mit dem Schlittenträger 26 fest verbunden.

Vorliegend ist jedoch ein weiterer Bewegungsfreiheitsgrad vorhanden, nämlich in einer zu der Bearbeitungsachse Z1 winkelig, beispielsweise rechtwinkelig, verlaufenden Werkzeug-Stellachse X. An dem Schlittenträger 26 ist eine weitere Linearführung 28 mit beispielsweise Schienen 29 vorgesehen, an der die Schlittenbasis 27 entlang der Werkzeug-Stellachse X beweglich gelagert ist. Beispielsweise sind Gleitflächen, Rollen oder dergleichen andere Führungselemente 30 an den Schienen 29 beweglich gelagert. Ein Schlittenantrieb 30, der nur schematisch dargestellt ist, treibt die Schlittenbasis 27 relativ zum Schlittenträger 26 entlang der Werkzeug-Stellachse X an. Der Werkzeugschlitten 20 ist beispielsweise ein sogenannter Kreuzschlitten.

An dem Werkzeugschlitten 20 ist eine Hauptspindelanordnung 40 mit mehreren Hauptwerkzeugspindeln 41 vorgesehen. Ohne weiteres könnte selbstverständlich auch nur eine einzige Hauptwerkzeugspindel an dem Werkzeugschlitten 20 angeordnet sein.

Die Hauptwerkzeugspindeln 41 sind beispielsweise in einer oberen Hauptwerkzeugspindelreihe 42 und in einer unteren Hauptwerkzeugspindelreihe 43 in Reihenrichtung nebeneinander übereinander angeordnet. An einer Frontseite 31 des Werkzeugschlittens 20 sind beispielsweise Bearbeitungswerkzeuge 44 an den Hauptwerkzeugspindeln 41 angeordnet. Entgegengesetzt zu der Frontseite 31, also an einer Rückseite, stehen beispielsweise Spindelantriebe 45 der Hauptwerkzeugspindeln 41 nach hinten vor den Werkzeugschlitten 20, insbesondere die Schlittenbasis 27, vor.

Frontal vor dem Werkzeugschlitten 20 ist ein Werkstückträger 60 angeordnet. Der Werkstückträger 60 umfasst beispielsweise einen Werkstückbalken 61, der quer vor dem Werkzeugschlitten 20 verläuft. An dem Werkstückträger 60 sind mehrere Werkstückhalter 62 zum Halten von Werkstücken W, beispielsweise Pleueln, in einer Reihenrichtung 63 nebeneinander angeordnet. Die Reihenrichtung 63 verläuft parallel zu einer Längsachse 64 des Werkstückträgers 60.

Der Werkstückträger 60 ist um eine Positionier-Schwenkachse A, vorliegend seine Längsachse 64, schwenkbar gelagert, sodass an unterschiedlichen Werkstückhaltebereichen 65, z.B. Werkstückhaltebereichen 65A und 65B, gehaltene Werkstücke W jeweils frontal vor den Werkzeugschlitten 20 und somit vor die Bearbeitungswerkzeuge 44 in einen Bearbeitungsbereich 85 zur Bearbeitung schwenkbar sind oder auch von den Bearbeitungswerkzeugen 44 weg, beispielsweise in einen für eine Werkstückwechsel vorgesehenen Werkstückwechselbereich 86. Der Werkstückwechselbereich 86 und der Bearbeitungsbereich 85 sind beispielsweise an einander entgegengesetzten Seiten des Werkstückträgers 60 vorgesehen.

Die Werkstückhaltebereiche 65 sind an Außenumfangsseiten, insbesondere einander entgegengesetzten und/oder zueinander winkeligen, Außenumfangsseiten des Werkstückträgers 60 vorgesehen.

Es versteht sich, dass mehrere Werkstückhaltebereiche eine Option darstellen, d.h. dass auch nur ein einziger Werkstückhaltebereich an einem Werkstückträger vorgesehen sein kann.

Eine Positionierung der an dem Werkstückträger 60 angeordneten Werkstücke W relativ zu den Bearbeitungswerkzeugen 44 wird zumindest teilweise durch den Werkstückträger 60 geleistet. Der Werkstückträger 60 ist an einer Werkstückträger-Linearführung 70 entlang einer vertikalen Stellachse Y linear verstellbar. An dem Werkstückträger 60 angeordnete Werkstücke W können also in Bezug auf die Stellachse Y relativ zu den Bearbeitungswerkzeugen 44 verstellt werden.

Der Werkzeugschlitten 20 positioniert also die Bearbeitungswerkzeuge 44 entlang der horizontalen Achsen, der Bearbeitungsachse Z1 und der Werkzeug-Stellachse X, während der dritte lineare Bewegungsfreiheitsgrad durch den Werkstückträger 60 und die Werkstückträger-Linearführung 70 geleistet wird.

Die Werkstückträger-Linearführung 70 umfasst an Ständern oder Stützen 71 vorgesehene Führungsschienen 73, an denen Schlitten 72 beweglich gelagert sind, beispielsweise anhand von Rollen, Gleitstücken oder dergleichen. Die Ständer oder Stützen 71, die man auch als Türme bezeichnen könnte, stehen beispielsweise nach oben vor dem Werkzeugabschnitt 12 vor und sind an diesem befestigt.

Die Schlitten 72, die beispielsweise an jeweils einem Paar von Führungsschienen 73 beweglich gelagert sind, sind durch Schlittenantriebe 74 antreibbar. Die Schlittenantriebe 74 umfassen beispielsweise jeweils einen Antriebsmotor 75.

Ein jeweiliger Antriebsmotor 75 treibt einen jeweiligen Schlitten 72 über beispielsweise einen Spindeltrieb oder dergleichen an (was in der Zeichnung nicht dargestellt ist). Beispielsweise sind die Antriebsmotoren 75 oben an den Ständern oder Stützen 71 angeordnet, was zu Kühlungszwecken und Montagezwecken vorteilhaft ist.

Zur Drehlagerung um die Positionier-Schwenkachse A ist der Werkstückträger 60 an seinen Längsendbereichen anhand von Drehlagern 77 schwenkbar gelagert. Die Drehlager 77 bilden Bestandteile einer Drehlageranordnung 76. Beispielsweise ist an jedem der Schlitten 72 jeweils eines der Drehlager 77 vorgesehen. Durch die Drehlagerung an seinen Längsendbereichen ist der Werkstückträger 60, also beispielsweise der Werkstückbalken 61, optimal abgestützt, dennoch aber für die Positionierarbeit oder Positionierung der Werkstücke W für eine Bearbeitung durch die Bearbeitungswerkzeuge 44 oder ein Werkstückwechsel beweglich.

Beispielsweise verläuft die Positionier-Schwenkachse A parallel zu der Werkzeug-Stellachse X.

Die vielseitige Beweglichkeit des Werkstückträgers 60 wird nicht nur dazu genutzt, die Werkstücke W relativ zu der Hauptspindelanordnung 40 zu positionieren und somit zur Bearbeitung durch die Hauptwerkzeugspindeln 41 bzw. deren Bearbeitungswerkzeuge 44, sondern auch für eine Positionierung relativ zu einer Funktionsbaugruppe 90, die zur Ausführung mindestens einer Funktion an den Werkstücken W ausgestaltet ist. Nachfolgend werden mehrere Funktionalitäten vorgestellt, von denen eine vorhanden sein kann oder mehrere gleichzeitig vorhanden sein können.

Die Funktionsbaugruppe 90 umfasst beispielsweise eine Spindelanordnung 190 mit einer Werkzeugspindel 91 oder mit mehreren Werkzeugspindeln 91. Die Werkzeugspindeln 91 sind beispielsweise ortsfest oder beweglich an einem Baugruppenträger 96 angeordnet.

Beim Ausführungsbeispiel sind beispielsweise zwei Werkzeugspindelreihen 92 und 93 vorgesehen, von denen die Werkzeugspindelreihe 92 in Bezug auf die Bearbeitungsachse Z1 einen größeren Abstand zu der Hauptspindelanordnung 40 hat als die andere Werkzeugspindelreihe 93.

Die Werkzeugspindelreihen 92 und 93 verlaufen parallel zu der Werkzeug-Stellachse X, also rechtwinkelig zu der Bearbeitungsachse Z1 und der Stellachse Y.

Die Werkzeugspindelreihen 92 und 93 umfassen beispielsweise jeweils drei Werkzeugspindeln 91. Es könnten auch weniger oder mehr Werkzeugspindeln 91 vorgesehen sein.

Die Werkzeugspindeln 91 sind zweckmäßigerweise linear bzw. in einer Reihenrichtung nebeneinander angeordnet sind.

Es ist auch ein gekrümmter oder bogenförmiger Verlauf einer Anreihung von mehreren Werkzeugspindeln bei einer Funktionsbaugruppe einer erfindungsgemäßen Werkzeugmaschine möglich.

Die Werkzeugspindelreihen 92 und 93 verlaufen beispielsweise parallel zueinander.

Beispielsweise stehen die Köpfe der Werkzeugspindeln 91 mit den Werkzeugaufnahmen für Bearbeitungswerkzeuge 94 vor eine Unterseite 97 des Baugruppenträgers 96 vor. Vor eine Oberseite 98 des Baugruppenträgers 96 stehen Spindelantriebe 95 der Werkzeugspindeln 91 vor.

Spindelachsen S1-S6 der Werkzeugspindeln 91 verlaufen beispielsweise rechtwinkelig zu den Spindelachsen der Hauptwerkzeugspindeln 41.

Beispielsweise verlaufen die Spindelachsen S1-S6 der Werkzeugspindeln 91 der Funktionsbaugruppe 90 parallel zu der zweiten Bearbeitungsachse Z2. Denkbar wären aber auch Spindelachsen der Werkzeugspindeln 91, die nicht parallel zur zweiten Bearbeitungsachse Z2 sind, beispielsweise für eine Schrägflächen-Bearbeitung.

Die Stützen 71 dienen zum Tragen oder zum Stützen des Baugruppenträgers 96, der oberhalb des Werkstückträgers 60 oder Werkstückbalkens 61 angeordnet ist. Der Baugruppenträger 96 hat eine lang gestreckte Gestalt und stützt sich mit seinen Längsendbereichen 99 jeweils oberseitig an den Stützen 71 ab.

Wenn also der Werkstückträger 60 entlang der Stellachse Y, der vertikalen Stellachse, die Werkstücke W in Richtung der Werkzeugspindeln 91 bzw. deren Bearbeitungswerkzeuge 94 verstellt, bewegt er die Werkstücke W entlang einer zweiten Bearbeitungsachse Z2.

Im Bereich der Bearbeitungswerkzeuge 94 ist ein zweiter Bearbeitungsbereich 185 vorgesehen. Zur Positionierung der Werkstücke W zu dem Bearbeitungsbereich 185 hin und aus diesem heraus und auch vorzugsweise innerhalb des Bearbeitungsbereiches 185 ist der Werkstückträger 60 ausgestaltet. Dort findet nämlich die Bearbeitung durch die Bearbeitungswerkzeuge 94 bzw. die Werkzeugspindeln 91 statt.

Der Werkstückträger 60 kann beispielsweise in mehreren Positionen entlang der Stellachse Y positioniert werden, beispielsweise in Positionen Y1 und Y2.

Die Werkzeugspindeln 91 können am Baugruppenträger 96 ortsfest sein.

Ein Abstand der Werkzeugspindeln 91 entspricht beispielsweise einem Abstand der Werkstückhalter 62. Somit können anhand der Werkzeugspindeln 91 mehrere Werkstücke W gleichzeitig bearbeitet werden, beispielsweise gefräst, gebohrt oder dergleichen.

Ohne weiteres können aber auch andere Funktionselemente an der Funktionsbaugruppe 90 realisiert werden, so zum Beispiel mindestens eine Prüfeinrichtung 191 und/oder mindestens eine Zentriereinrichtung 291.

Wenn also der der Werkstückträger 60 entlang der Stellachse Y oder der zweiten Bearbeitungsachse Z2 bewegt wird, kann er die Werkstücke W zu den Prüfeinrichtungen 191 verstellen, dass beispielsweise nach einer Bearbeitung durch die Hauptspindelanordnung 40 das Bearbeitungsergebnis überprüfbar ist.

Es ist auch möglich, dass beispielsweise nach einem Werkstückwechsel im Werkstückwechselbereich 86 die Werkstücke W von dem Werkstückträger 60 zunächst zu den Zentriereinrichtungen 291 bewegt werden, nämlich durch Schwenken um die Positionier-Schwenkachse A und anschließendes Verstellen entlang der Stellachse Y, also der zweiten Bearbeitungsachse Z2, um dort in eine exakte Position für die anschließende Bearbeitung durch die Hauptspindelanordnung 40 gebracht zu werden. Dazu werden die Werkstückhalter 62 beispielsweise etwas gelöst, sodass die Zentriereinrichtungen 292, zum Beispiel umfassend Zentrierdorne oder dergleichen, in Eingriff mit den Werkstücken W gebracht werden können und diese relativ zu den Werkstückhaltern 62 positioniert werden. Anschließend schwenkt der Werkstückträger 60 die Werkstücke W in den Bearbeitungsbereich 85 zur Bearbeitung durch die Hauptspindelanordnung 40.

Für einen schnellen und optimalen Werkzeugwechsel ist beispielsweise eine Werkstückwechseleinrichtung 300, beispielsweise umfassend einen Handlingroboter oder dergleichen, im Werkstückwechselbereich 86 angeordnet.

Vorzugsweise ist eine Werkzeugwechseleinrichtung 200 vorgesehen, mit der die Bearbeitungswerkzeuge 44 und/oder die Bearbeitungswerkzeuge 94 auswechselbar sind. Die Werkzeugwechseleinrichtung 200 umfasst beispielsweise einen Handlingroboter.

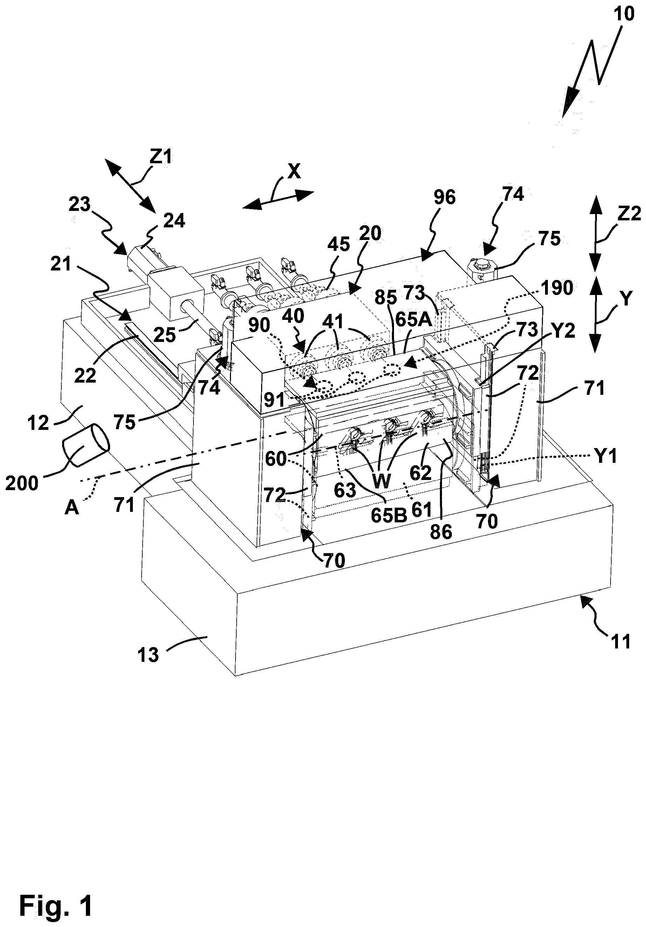

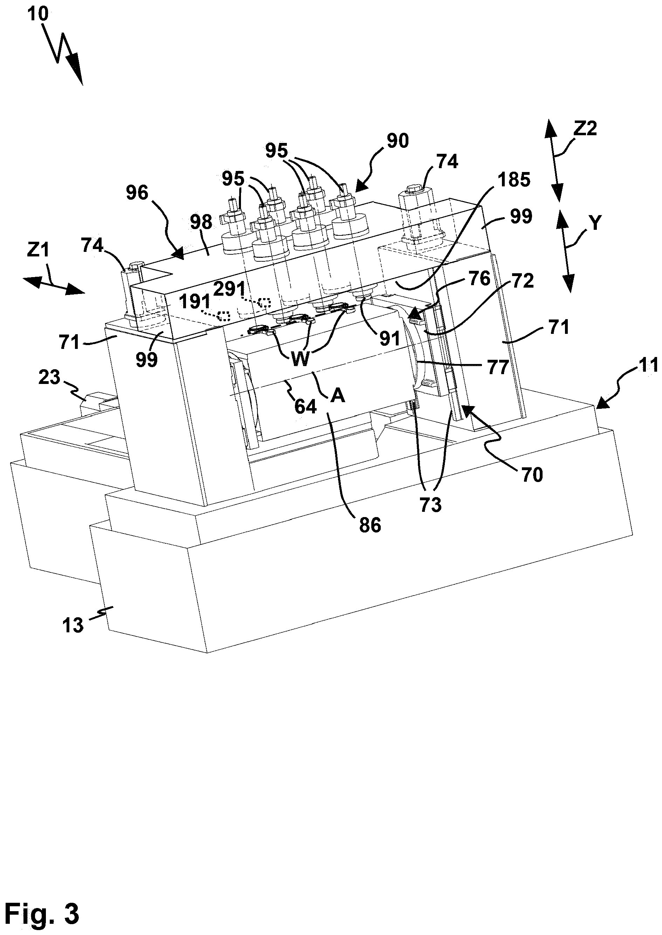

Beim Ausführungsbeispiel gemäß Figuren 1-3 ist der Baugruppenträger 96 bezüglich der Maschinenbasis 11 ortsfest.

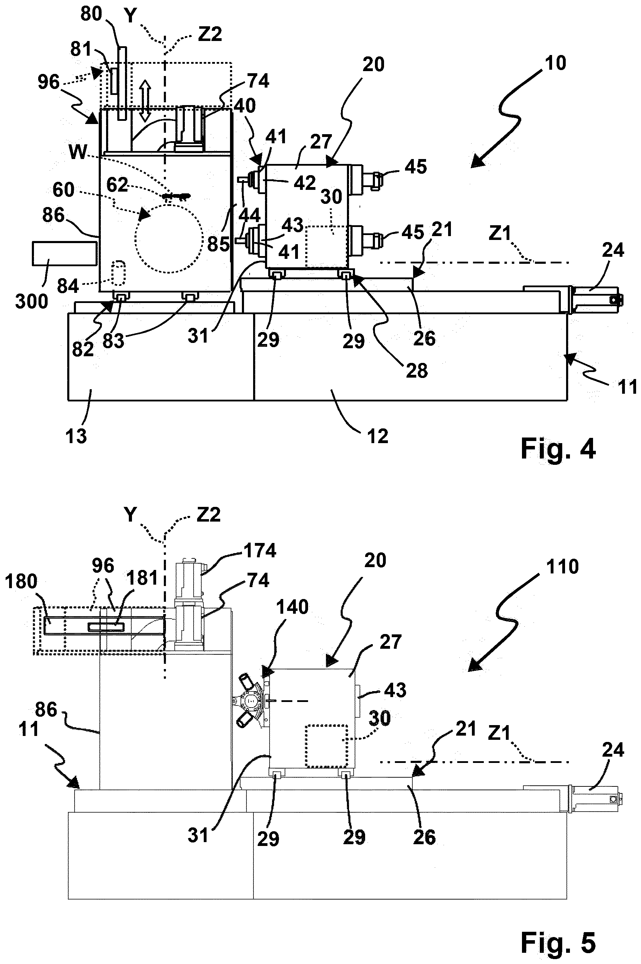

Es ist aber auch möglich, dass eine zusätzliche Verstellbarkeit vorgesehen ist, beispielsweise indem der Baugruppenträger 96 wie in der Variante gemäß Figur 4 anhand einer weiteren Linearführung 80, also beispielsweise einer Y-Linearführung, entlang der vertikalen Stellachse Y relativ zu den Stützen 71 verstellbar ist. Somit kann zumindest ein Teil der Verstellarbeit oder Positionierarbeit der Funktionsbaugruppe 90, also beispielsweise der Werkzeugspindeln 91, bezüglich der zweiten Bearbeitungsachse Z2 durch Linearführung 80 realisiert werden. Linearführung 80 ist ein Antrieb 81 zugeordnet, um den Baugruppenträger 96 entlang der Y-Achse oder der zweiten Bearbeitungsachse Z2 zu verstellen.

Weiterhin ist es denkbar, dass der Baugruppenträger 96 in einer weiteren Richtung verstellbar gelagert ist, beispielsweise entlang oder parallel zu der X-Achse. Dazu ist es beispielsweise denkbar, dass die Stützen 71 wie in Figur 4 angedeutet an einer Linearführung 82 beweglich bezüglich der Maschinenbasis 11 gelagert sind. An der Oberseite der Maschinenbasis 11 sind beispielsweise Schienen 83 vorgesehen, an denen die Stützen 71 anhand von Rollen, Gleitelementen oder dergleichen, beweglich gelagert sind. Beispielsweise ist ein Antrieb 84 zum Antreiben der Stützen 71 bei der Verstellung entlang der Linearführung 82 vorgesehen. Somit kann nicht nur der Werkstückträger 60, sondern auch die Funktionsbaugruppe 90 relativ zu der Maschinenbasis 11 entlang oder parallel zu der X-Achse verstellt werden, um die Werkstücke W bezüglich der Funktionsbaugruppe 90 und/oder der Hauptspindelanordnung 40 zu positionieren.

Bei dem in Figur 5 dargestellten Ausführungsbeispiel einer Werkzeugmaschine 110 sind im Wesentlichen die gleichen Komponenten vorhanden wie bei der Werkzeugmaschine 10. Gleiche oder gleichartige Bauteile sind mit denselben Bezugsziffern versehen. Insoweit wird also auf die obige Beschreibung Bezug genommen.

Eine besonders bevorzugte Ausführungsform zur Verstellung einer Funktionsbaugruppe, zum Beispiel der Funktionsbaugruppe 90, ist in Figur 5 angedeutet, bei der der Baugruppenträger 96 entlang der Z1 -Achse oder parallel zu der Z1-Achse anhand einer Linearführung 180 verstellbar ist. Der Linearführung 180 ist ein Antrieb 181 zugeordnet. Anhand der Linearführung 180 ist es beispielsweise möglich, die Werkstücke W, die am Werkstückträger 60 gehalten sind, zwischen den Werkstückspindelreihen 92 und 93 zu verstellen bzw. bezüglich der Werkstückspindelreihen 92 und 93 zu positionieren. Somit können beispielsweise nacheinander durch die Werkzeugspindelreihen 92 und 93 Bearbeitungen der Werkstücke W durchgeführt werden.

Weiterhin ist bei der Werkzeugmaschine 110 gemäß Figur 5 anstelle der Hauptspindelanordnung 40 eine Anordnung mit einem oder mehreren Werkzeugrevolvern 140 vorgesehen, die einen leichten Werkzeugwechsel bei der Bearbeitung der Werkstücke W ermöglichen. Der oder die Werkzeugrevolvers 140 sind beispielsweise an der Frontseite 31 des Werkzeugschlittens 30 angeordnet. Jeder Werkzeugrevolvers 140 umfasst beispielsweise einen Werkzeugträger, der um eine Revolverachse schwenkbar gelagert ist. Ein jeweils in Bearbeitungspositionen befindliches Bearbeitungswerkzeug oder eine jeweils in Bearbeitungspositionen befindliche Werkzeugaufnahme für ein Bearbeitungswerkzeug ist mit einem Spindelantrieb des Werkzeugrevolvers 140 gekoppelt und wird von diesem drehangetrieben.

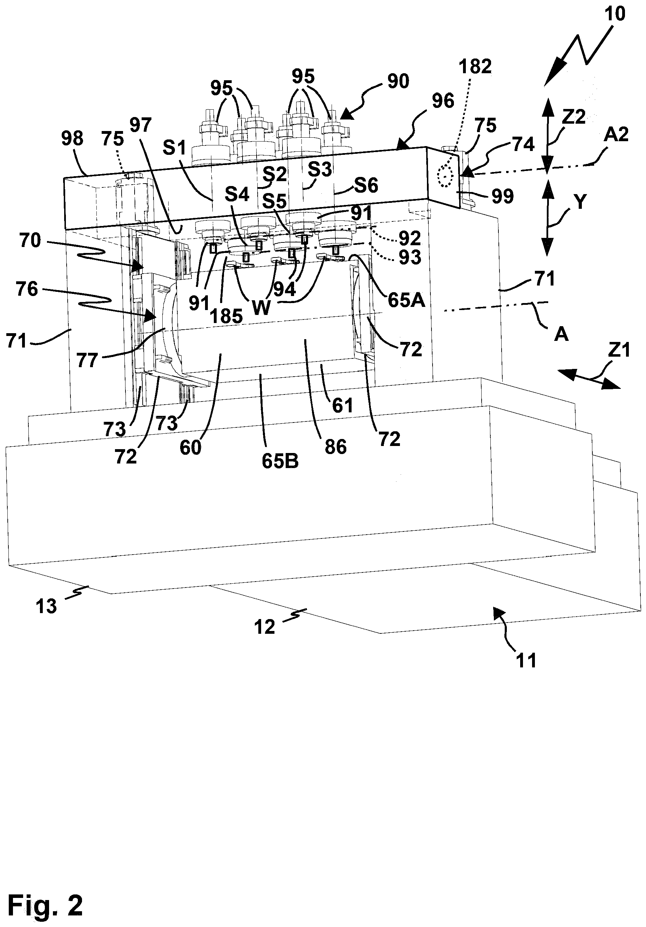

In Figur 2 ist angedeutet, dass die Funktionsbaugruppe 90 auch um beispielsweise eine Schwenkachse A2 schwenkbar sein kann. Hierfür ist der Baugruppenträger 96 beispielsweise an seinen beiden Längsenden jeweils anhand eines Drehlagers 182 bezüglich der Stützen oder Ständer 71 drehbar gelagert. Auf diese Weise können beispielsweise am Funktionsbaugruppenträger 96 an zueinander drehwinkelversetzten Seiten unterschiedliche Funktionselemente, beispielsweise an einer Seite Werkzeugspindeln mit ersten Werkzeugen, an einer anderen Seite andere Werkzeugspindeln oder Werkzeugspindeln mit zweiten, von den ersten Werkzeugen verschiedenen Werkzeugen oder auch zum Beispiel die Prüfeinrichtungen 191 oder Zentriereinrichtungen 291 angeordnet sein. Durch Drehung der Funktionsbaugruppe 90 oder des Baugruppenträgers 96 können die verschiedenen Funktionselemente in eine Bearbeitungslage bezüglich des Werkstückträgers 60, also zum Beispiel nach unten, geschwenkt werden.

## Patentansprüche

1. Werkzeugmaschine mit einer Hauptspindelanordnung (40) und einem Werkstückträger (60), wobei die Hauptspindelanordnung (40) mindestens eine Hauptwerkzeugspindel (41) zur Aufnahme eines Bearbeitungswerkzeugs (44) aufweist und an dem Werkstückträger (60) mindestens eine Werkstück-Halterung zum Halten eines Werkstücks (W) angeordnet ist, wobei die mindestens eine Hauptwerkzeugspindel (41) entlang einer insbesondere horizontalen Bearbeitungsachse (Z1) relativ zu dem frontal vor der Hauptspindelanordnung (40) angeordneten Werkstückträger (60) zur Bearbeitung eines an dem mindestens einen Werkstückhalter (62) angeordneten Werkstücks (W) mit dem Bearbeitungswerkzeug (44) verstellbar ist, wobei der Werkstückträger (60) quer zu der Bearbeitungsachse (Z1) entlang einer Stellachse (Y) anhand einer Werkstückträger-Linearführung (70) relativ zu der Hauptspindelanordnung (40) verstellbar gelagert ist, und wobei neben der Hauptspindelanordnung (40) und dem Werkstückträger (60) eine Funktionsbaugruppe (90) zur Ausführung mindestens einer Funktion an einem an dem mindestens einen Werkstückhalter (62) angeordneten Werkstück (W) angeordnet ist und der Werkstückträger (60) zur Positionierung des mindestens einen Werkstückhalters (62) relativ zu der Funktionsbaugruppe (90) entlang der eine zweite Bearbeitungsachse (Z2) bildenden Stellachse (Y) der Werkstückträger-Linearführung (70) verstellbar ist, **dadurch gekennzeichnet, dass** die Werkstückträger-Linearführung (70) an mindestens einer Stütze (71) zum Stützen der Funktionsbaugruppe (90) angeordnet ist.

2. Werkzeugmaschine nach Anspruch 1, **dadurch gekennzeichnet, dass** die Funktionsbaugruppe (90) mindestens eine Werkzeugspindel (91) zur Bearbeitung des mindestens einen Werkstücks (W) anhand eines Bearbeitungswerkzeugs (95) umfasst.

3. Werkzeugmaschine nach Anspruch 2, **dadurch gekennzeichnet, dass** die mindestens eine Werkzeugspindel (91) der Funktionsbaugruppe (90) ortsfest bezüglich einer Maschinenbasis (11) der Werkzeugmaschine an einem Baugruppenträger (96) der Funktionsbaugruppe (90) angeordnet ist oder an dem Baugruppenträger (96) anhand einer Linearführung, insbesondere entlang einer zu der ersten Bearbeitungsachse (Z1) parallelen Stellachse (Y), linear beweglich gelagert ist.

4. Werkzeugmaschine nach Anspruch 2 oder 3, **dadurch gekennzeichnet, dass** die mindestens eine Werkzeugspindel (91) einen Bestandteil einer Spindelanordnung mit mindestens zwei in einer Reihenrichtung nebeneinander angeordneten Werkzeugspindeln (91) bildet.

5. Werkzeugmaschine nach einem der vorhergehenden Ansprüche, **dadurch gekennzeichnet, dass** an dem Werkstückträger (60) mindestens zwei in einer Reihenrichtung nebeneinander angeordnete Werkstückhalter (62) angeordnet sind.

6. Werkzeugmaschine nach einem der vorhergehenden Ansprüche, **dadurch gekennzeichnet, dass** die Hauptspindelanordnung (40) mit der entlang der ersten Bearbeitungsachse (Z1) verstellbaren mindestens einen Hauptwerkzeugspindel (41) mindestens zwei in einer Reihenrichtung nebeneinander angeordnete Hauptwerkzeugspindeln (41) oder einen Werkzeugrevolver (140) aufweist.

7. Werkzeugmaschine nach Anspruch 6, **dadurch gekennzeichnet, dass** die Hauptwerkzeugspindeln (41) an einem Werkzeugschlitten (20) ortsfest angeordnet sind und/oder dass die Hauptwerkzeugspindeln (41) eine erste Hauptwerkzeugspindelreihe (42) und eine zweite Hauptwerkzeugspindelreihe (43) mit mindestens zwei in einer Reihenrichtung nebeneinander, insbesondere horizontal übereinander, angeordneten Hauptwerkzeugspindeln (41) bilden.

8. Werkzeugmaschine nach einem der vorhergehenden Ansprüche, **dadurch gekennzeichnet, dass** die Funktionsbaugruppe (90) mindestens eine Prüfeinrichtung (191) zum Prüfen oder Messen des an dem mindestens einen Werkstückhalter (62) angeordneten Werkstücks (W) und/oder mindestens eine Zentriereinrichtung (291) zum Zentrieren des an dem mindestens ein Werkstückhalter (62) angeordneten Werkstücks (W) umfasst.

9. Werkzeugmaschine nach einem der vorhergehenden Ansprüche, **dadurch gekennzeichnet, dass** die eine erste Bearbeitungsachse (Z1) bildende Bearbeitungsachse (Z1) der mindestens einen Hauptwerkzeugspindel (41) und die zweite Bearbeitungsachse (Z2) orthogonal zueinander sind und/oder dass die zweite Bearbeitungsachse (Z2) oder die Stellachse (Y) der Werkstückträger-Linearführung (70) eine vertikale Achse ist.

10. Werkzeugmaschine nach einem der vorhergehenden Ansprüche, **dadurch gekennzeichnet, dass** die Funktionsbaugruppe (90) einen insbesondere als Portal ausgestalteten oder einem Portal angeordneten Baugruppenträger (96) aufweist, der ortsfest an einer Maschinenbasis (11) der Werkzeugmaschine (10) angeordnet ist.

11. Werkzeugmaschine nach einem der vorhergehenden Ansprüche, **dadurch gekennzeichnet, dass** die Funktionsbaugruppe (90) oberhalb der Werkstückträger-Linearführung (70) oder des Werkstückträgers (60) angeordnet ist.

12. Werkzeugmaschine nach einem der vorhergehenden Ansprüche, **dadurch gekennzeichnet, dass** der Werkstückträger (60) als ein Werkstückbalken ausgestaltet ist und/oder der Werkstückträger (60) um eine, insbesondere zu der Stellachse (Y) und/oder der horizontalen Bearbeitungsachse (Z1), vorteilhaft rechtwinkelig, quer verlaufende, Positionier-Schwenkachse schwenkbar gelagert ist.

13. Werkzeugmaschine nach einem der vorhergehenden Ansprüche, **dadurch gekennzeichnet, dass** die mindestens eine entlang der ersten Bearbeitungsachse (Z1) verstellbare Hauptwerkzeugspindel (41) und/oder der Werkstückträger (60) und/oder die Funktionsbaugruppe (90) quer zu der ersten Bearbeitungsachse (Z1) und der zweiten Bearbeitungsachse (Z2), insbesondere horizontal, beweglich gelagert ist.

14. Werkzeugmaschine nach einem der vorhergehenden Ansprüche, **dadurch gekennzeichnet, dass** die Funktionsbaugruppe (90) entlang mindestens einer Stellachse, insbesondere der ersten Bearbeitungsachse (Z1), anhand einer Linearführung bezüglich eines Maschinenbetts oder einer Maschinenbasis (11) beweglich und/oder um mindestens eine Schwenkachse schwenkbar gelagert ist.

## Claims

1. Machine tool with a main spindle assembly (40) and a work carrier (60), wherein the main spindle assembly (40) has at least one main tool spindle (41) to hold a machining tool (44), and on the work carrier (60) there is mounted at least one work holder for holding a workpiece (W), wherein the main tool spindle or spindles (41) is or are adjustable along a machining axis (Z1), in particular horizontal, relative to the work carrier (60) and arranged in front of the main spindle assembly (40), for the machining by the machining tool (44) of a workpiece (W) mounted on the workpiece holder or holders (62), wherein the work carrier (60) is mounted so as to be adjustable relative to the main spindle assembly (40), transversely to the machining axis (Z1) along a positioning axis (Y) with the aid of a work carrier linear guide (70), and wherein there is provided next to the main spindle assembly (40) and the work carrier (60) a function module (90) for executing at least one function on a workpiece (W) mounted on the workpiece holder or holders (62), and the work carrier (60) is adjustable along the positioning axis (Y) of the work carrier linear guide (70) forming a second machining axis (Z2) for the positioning of the workpiece holder or holders (62) relative to the function module (90), **characterised in that** the work carrier linear guide (70) is mounted on at least one support (71) for the support of the function module (90).

2. Machine tool according to claim 1, **characterised in that** the function module (90) includes at least one tool spindle (91) for machining the workpiece (W) or workpieces (W) with the aid of the machining tool (95).

3. Machine tool according to claim 2, **characterised in that** the tool spindle or spindles (91) of the function module (90) is or are fixed immovably, relative to a machine base (11) of the machine tool, on a module support (96) of the function module (90), or is or are mounted with linear movement capacity on the module support (96) with the aid of a linear guide, in particular along a positioning axis (Y) parallel to the first machining axis (Z1).

4. Machine tool according to claim 2 or 3, **characterised in that** the tool spindle or spindles (91) forms or form a part of a spindle assembly with at least two tool spindles (91) arranged side by side in a row direction.

5. Machine tool according to any of the preceding claims, **characterised in that** on the work carrier (60) at least two workpiece holders (62) are mounted, arranged side by side.

6. Machine tool according to any of the preceding claims, **characterised in that** the main spindle assembly (40) with the main tool spindle or spindles (41) adjustable along the first machining axis (Z1) has at least two main tool spindles (41) arranged side by side in a row direction or one tool turret (140).

7. Machine tool according to claim 6, **characterised in that** the main tool spindles (41) are fixed immovably to a tool carriage (20) and/or that the main tool spindles (41) form a first main tool spindle row (42) and a second main tool spindle row (43) with at least two main tool spindles (41) arranged next to one another, in particular horizontally one above the other.

8. Machine tool according to any of the preceding claims, **characterised in that** the function module (90) includes at least one testing device (191) for testing or measuring the workpiece (W) mounted on the workpiece holder or holders (62), and/or at least one centring device (291) for centring the workpiece (W) mounted on the workpiece holder or holders (62).

9. Machine tool according to any of the preceding claims, **characterised in that** the machining axis (Z1) of the main tool spindle or spindles (41) forming a first machining axis (Z1) and the second machining axis (Z2) are orthogonal to one another and/or that the second machining axis (Z2) or the positioning axis (Y) of the work carrier linear guide (70) is a vertical axis.

10. Machine tool according to any of the preceding claims, **characterised in that** the function module (90) has a module support (96) in particular in the form of a portal or mounted on a portal, which is fixed immovably to a machine base (11) of the machine tool (10).

11. Machine tool according to any of the preceding claims, **characterised in that** the function module (90) is mounted above the work carrier linear guide (70) or the work carrier (60).

12. Machine tool according to any of the preceding claims, **characterised in that** the work carrier (60) is in the form of a workpiece beam and/or the work carrier (60) is pivotably mounted around a positioning swivel axis running transversely, advantageously perpendicular, in particular to the positioning axis (Y) and/or the horizontal machining axis (Z1).

13. Machine tool according to any of the preceding claims, **characterised in that** the main tool spindle or spindles (41), adjustable along the first machining axis (Z1) and/or the work carrier (60) and/or the function module (90), is or are mounted so as to be movable transversely to the first machining axis (Z1) and the second machining axis (Z2), in particular horizontally.

14. Machine tool according to any of the preceding claims, **characterised in that** the function module (90) is mounted movably with the aid of a linear guide along at least one positioning axis, in particular of the first machining axis (Z1), relative to a machine bed or a machine base (11), and/or pivotably around at least one swivel axis.

## Revendications

1. Machine-outil avec un ensemble de broches principales (40) et un porte-pièce (60), dans laquelle l'ensemble de broches principales (40) présente au moins une broche porte-outil principale (41) servant à recevoir un outil d'usinage (44) et au moins une fixation de pièce servant à maintenir une pièce (W) est disposée au niveau du porte-pièce (60), dans laquelle l'au moins une broche porte-outil principale (41) peut être ajustée le long d'un axe d'usinage (Z1) en particulier horizontal par rapport au porte-pièce (60) disposé frontalement devant l'ensemble de broches principales (40) aux fins de l'usinage d'une pièce (W) disposée au niveau de l'au moins un système de maintien de pièce (62) avec l'outil d'usinage (44), dans laquelle le porte-pièce (60) est monté de manière à pouvoir être ajusté de manière transversale par rapport à l'axe d'usinage (Z1) le long d'un axe de réglage (Y) à l'aide d'un système de guidage linéaire de porte-pièce (70) par rapport à l'ensemble de broches principales (40), et dans laquelle, outre l'ensemble de broches principales (40) et le porte-pièce (60), un module fonctionnel (90) servant à exécuter au moins une fonction est disposé au niveau d'une pièce (W) disposée au niveau de l'au moins un système de maintien de pièce (62) et le porte-pièce (60) peut être ajusté le long de l'axe de réglage (Y), formant un deuxième axe d'usinage (Z2), du système de guidage linéaire de porte-pièce (70) pour positionner l'au moins un système de maintien de pièce (62) par rapport au module fonctionnel (90), **caractérisée en ce que** le système de guidage linéaire de porte-pièce (70) est disposé au niveau d'au moins un support (71) servant à supporter le module fonctionnel (90).

2. Machine-outil selon la revendication 1, **caractérisée en ce que** le module fonctionnel (90) comprend au moins une broche porte-outil (91) servant à usiner l'au moins une pièce (W) à l'aide d'un outil d'usinage (95).

3. Machine-outil selon la revendication 2, **caractérisée en ce que** l'au moins une broche porte-outil (91) du module fonctionnel (90) est disposée de manière stationnaire par rapport à une base de machine (11) de la machine-outil au niveau d'un porte-module (96) du module fonctionnel (90) ou est montée de manière mobile linéairement au niveau du porte-module (96) à l'aide d'un système de guidage linéaire, en particulier le long d'un axe de réglage (Y) parallèle par rapport au premier axe d'usinage (Z1).

4. Machine-outil selon la revendication 2 ou 3, **caractérisée en ce que** l'au moins une broche porte-outil (91) forme un élément constitutif d'un ensemble de broches avec au moins deux broches porte-outil (91) disposées côte à côte dans une direction d'alignement.

5. Machine-outil selon l'une quelconque des revendications précédentes, **caractérisée en ce qu'**au moins deux systèmes de maintien de pièce (62) disposés côte à côte dans une direction d'alignement sont disposés au niveau du porte-pièce (60).

6. Machine-outil selon l'une quelconque des revendications précédentes, **caractérisée en ce que** l'ensemble de broches principales (40) avec l'au moins une broche porte-outil principale (41) pouvant être ajustée le long du premier axe d'usinage (Z1) présente au moins deux broches porte-outil principales (41) disposées côte à côte dans une direction d'alignement ou une tourelle porte-outils (140).

7. Machine-outil selon la revendication 6, **caractérisée en ce que** les broches porte-outil principales (41) sont disposées de manière stationnaire au niveau d'un chariot porte-outil (20), et/ou que les broches porte-outil principales (41) forment une première rangée de broches porte-outil principales (42) et une deuxième rangée de broches porte-outil principales (43) avec au moins deux broches porte-outil principales (41) disposées côte à côte dans une direction d'alignement, en particulier de manière superposée horizontalement.

8. Machine-outil selon l'une quelconque des revendications précédentes, **caractérisée en ce que** le module fonctionnel (90) comprend au moins un dispositif de contrôle (191) servant à contrôler ou mesurer la pièce (W) disposée au niveau de l'au moins un système de maintien de pièce (62) et/ou au moins un dispositif de centrage (291) servant à centrer la pièce (W) disposée au niveau de l'au moins un système de maintien de pièce (62).

9. Machine-outil selon l'une quelconque des revendications précédentes, **caractérisée en ce que** l'axe d'usinage (Z1), formant un premier axe d'usinage (Z1), de l'au moins une broche porte-outil principale (41) et le deuxième axe d'usinage (Z2) sont orthogonaux l'un par rapport à l'autre, et/ou que le deuxième axe d'usinage (Z2) ou l'axe de réglage (Y) du système de guidage linéaire de porte-pièce (70) est un axe vertical.

10. Machine-outil selon l'une quelconque des revendications précédentes, **caractérisée en ce que** le module fonctionnel (90) présente un porte-module (96) configuré en particulier sous la forme d'un portique ou disposé au niveau d'un portique, qui est disposé de manière stationnaire au niveau d'une base de machine (11) de la machine-outil (10).

11. Machine-outil selon l'une quelconque des revendications précédentes, **caractérisée en ce que** le module fonctionnel (90) est disposé au-dessus du système de guidage linéaire de porte-pièce (70) ou du porte-pièce (60).

12. Machine-outil selon l'une quelconque des revendications précédentes, **caractérisée en ce que** le porte-pièce (60) est configuré sous la forme d'une poutre porte-pièce, et/ou le porte-pièce (60) est monté de manière à pouvoir pivoter autour d'un axe de pivotement de positionnement s'étendant de manière transversale, de manière avantageuse à angle droit, en particulier par rapport à l'axe de réglage (Y) et/ou à l'axe d'usinage (Z1) horizontal.

13. Machine-outil selon l'une quelconque des revendications précédentes, **caractérisée en ce que** l'au moins une broche porte-outil principale (41) pouvant être ajustée le long du premier axe d'usinage (Z1) et/ou le porte-pièce (60) et/ou le module fonctionnel (90) est monté(e) de manière mobile transversalement par rapport au premier axe d'usinage (Z1) et au deuxième axe d'usinage (Z2), en particulier horizontalement.

14. Machine-outil selon l'une quelconque des revendications précédentes, **caractérisée en ce que** le module fonctionnel (90) est monté de manière mobile le long d'au moins un axe de réglage, en particulier du premier axe d'usinage (Z1), à l'aide d'un système de guidage linéaire par rapport à un banc de machine ou à une base de machine (11) et/ou de manière à pouvoir pivoter autour d'au moins un axe de pivotement.
